Europäisches Patentamt

European Patent Office

Office européen des brevets

(11) **EP 1 291 508 A2**

(12) **EUROPÄISCHE PATENTANMELDUNG**

(43) Veröffentlichungstag:
  **12.03.2003  Patentblatt 2003/11**

(51) Int Cl.⁷: **F02D 9/02**, F02D 9/04,
  F02D 9/08, F02D 41/18

(21) Anmeldenummer: 02102264.5

(22) Anmeldetag: **02.09.2002**

(84) Benannte Vertragsstaaten:
  **AT BE BG CH CY CZ DE DK EE ES FI FR GB GR
  IE IT LI LU MC NL PT SE SK TR**
  Benannte Erstreckungsstaaten:
  **AL LT LV MK RO SI**

(30) Priorität: **11.09.2001  DE 10144674**

(71) Anmelder: **SIEMENS AKTIENGESELLSCHAFT
  80333 München (DE)**

(72) Erfinder:
  • **Weber, Gerald
    93055, Regensburg (DE)**
  • **Zhang, Hong
    93105, Tegernheim (DE)**

(54) **Verfahren zur Erkennung einer Fehlfunktion an einer Abgasklappeneinrichtung und/oder einer Saugrohrumschalteinrichtung**

(57)   Die vorliegende Erfindung befasst sich mit der Fehlerdiagnose bei einer Abgasklappe oder einer Klappe (16) zur Saugrohrumschaltung. Um deren Funktion überprüfen zu können, wird die bei geöffneter Drosselklappe eingesaugte Luft gemessen und mit einem Modellwert verglichen. Für die Fehlerdiagnose an der Abgasklappe wird die Messung bei hoher Drehzahl durchgeführt. Bei der Messung für die Saugrohrumschaltung wird der modellierte Luftstrom mit dem angesaugten Luftstrom bei niedriger Drehzahl verglichen.

FIG 2

EP 1 291 508 A2

**Beschreibung**

Die Erfindung betrifft Verfahren zur Erkennung einer Fehlfunktion einer Abgasklappeneinrichtung und/oder einer Saugrohrumschalteinrichtung.

Die Abgasklappeneinrichtung besitzt eine Abgasklappe zur Beeinflussung der Akustik in einem Abgassystem einer Brennkraftmaschine. Die Abgasklappeneinrichtung schaltet ansprechend auf Steuersignale einer Motorsteuerung die Abgasklappe in die geöffnete oder geschlossene Position. Die Abgasklappe wird bei niedrigen Drehzahlen, ungefähr bis 2500 U/min, in einer geschlossenen Stellung gebracht. In der geschlossenen Stellung der Abgasklappe werden die bei niedrigen Drehzahlen dominierenden, tieffrequenten Mündungsgeräusche drastisch reduziert. Erst bei einer höheren Drehzahl öffnet die Abgasklappe, da dann die Roll- und Fahrgeräusche überwiegen. Die Abgasklappe kann auch abhängig von einer Lastschwelle eingestellt werden. Ist die Abgasklappe bei hoher Drehzahl und Last, also einem hohen Luftmassenstrom in die Brennkraftmaschine, nicht geöffnet, so wird der Luftmassenstrom in die Zylinder durch eine erhöhte interne Abgasrückführung reduziert.

Bei Motorsteuerungssystemen mit einer Saugrohrumschaltung wird zur Beeinflussung der maximalen Füllung eine Saugrohrklappe betätigt, die die Länge des Ansaugrohrs verändert. Wenn die Saugrohrklappe zur Saugrohrumschaltung bei niedriger Drehzahl nicht geschlossen ist, wird die Motorleistung bei voll geöffneter Drosselklappe wegen der fehlenden Resonanzladung reduziert. Mithin erfolgt lediglich ein reduzierter Luftmassenstrom in die Zylinder. Im stationären Zustand ist damit auch der Luftmassenstrom durch die Drosselklappe reduziert.

Es ist bekannt, sowohl bei der Saugrohrumschalteinrichtung als auch bei der Abgasklappeneinrichtung eine elektrische Diagnose, beispielsweise auf Kurzschluss oder Leitungsbruch, des jeweiligen Aktuators durchzuführen. Eine darüber hinausgehende Diagnose einer Fehlfunktion ist nicht bekannt.

Der Erfindung liegt die Aufgabe zugrunde, ein Verfahren bereitzustellen, mit dem die Motorsteuerung feststellen kann, ob eine Abgasklappeneinrichtung und/oder eine Saugrohrumschalteinrichtung einwandfrei funktionieren.

Erfindungsgemäß wird die Aufgabe für eine Abgasklappeneinrichtung durch ein Verfahren nach Anspruch 1 gelöst.

Das erfindungsgemäße Verfahren erkennt eine Fehlfunktion einer Abgasklappeneinrichtung. Die Abgasklappeneinrichtung besitzt eine Abgasklappe, die zur Beeinflussung der Akustik in einem Abgassystem ansprechend auf Steuersignale einer Motorsteuerung schließt oder öffnet. Vorzugsweise ist die Abgasklappe bei niedrigen Drehzahlen der Brennkraftmaschine, vorzugsweise bei weniger als ungefähr 2500 U/min, geschlossen, während sie bei höheren Drehzahlwerten geöffnet ist. Um eine Fehlfunktion an der Abgasklappe zu erkennen, misst ein Luftmassensensor die durch eine Drosselklappe tretende Luftmasse (m_thr_real), bei hoher Drehzahl. Bei hoher Drehzahl und/oder einem hohen Luftmassenstrom sollte bei einwandfreier Funktionsweise die Abgasklappe geöffnet sein. Die Motorsteuerung vergleicht die gemessene Luftmasse mit einem Modellwert für den Luftmassenstrom (m_thr_mod), der von der Umgebungstemperatur (T_amb) und dem Druck (P_thr) abhängt. Die Motorsteuerung vergleicht die beiden Werte für den Luftmassenstrom und erkennt mit Hilfe der Abweichung des gemessenen Wertes von den Modellwerten, ob die Abgasklappe geöffnet ist. Die Abweichung ist beispielsweise der Absolutbetrag der Differenzwerte. Ist die Abgasklappe bei hoher Drehzahl geschlossen, so wird über die interne Abgasrückführung der Luftmassenstrom durch die Drosselklappe in die Zylinder reduziert. Dieser Effekt wird erfindungsgemäß genutzt, um die Funktionsfähigkeit der Abgasklappe zu diagnostizieren.

In einer bevorzugten Weiterführung erzeugt die Motorsteuerung ein Signal, das eine Fehlfunktion der Abgasklappeneinrichtung anzeigt, wenn die Abweichung einen Schwellenwert überschreitet. Aufgrund der Unsicherheit bei den modulierten Werten wird nicht jeder Abweichung zwischen gemessenem Wert und modelliertem Wert als eine Fehlfunktion erkannt. Vielmehr wird ein Schwellenwert definiert, den die Abweichung überschreiten muss, damit eine Fehlfunktion erkannt wird.

Eine besonders bevorzugte Überprüfung der Diagnose erfolgt, indem die Motorsteuerung nach einem Befehl zum Öffnen der Abgasklappe ein Signal zum Schließen der Abgasklappe erzeugt und an die Abgasklappeneinrichtung anlegt. Die Motorsteuerung erkennt hierbei eine Fehlfunktion der Abgasklappe lediglich dann, wenn die Abweichung nach dem Signal zum Schließen der Abgasklappe nicht zunimmt. Dadurch, dass das Signal der Motorsteuerung zum Schließen der Abgasklappe bei hohem angeforderten Luftstrom angelegt wird, müsste bei ordnungsgemäßem Betrieb die Abgasklappe sich schließen. Bei einem fehlerhaften Fall darf die Abweichung zwischen modelliertem Wert und gefühltem Wert nicht zunehmen. Hierbei ist vorzugsweise noch die Verzögerungszeit zu berücksichtigen, die bis zum stationär werden des Saugrohrdrucks verstreicht.

Eine Fehlfunktion in der Abgasklappeneinrichtung ist in der Werkstatt überaus schwierig zu diagnostizieren, da für einen Fahrer des Fahrzeugs lediglich das Phänomen auftritt, dass bei hohen Drehzahlen die Brennkraftmaschine über das Gaspedal angeforderte Leistung nicht oder nicht schnell genug bereitstellt. Die Suche nach der Ursache dieses Verhaltens ist jedoch zeit- und kostenaufwendig. Bevorzugt zeigt daher die Motorsteuerung eine erkannte Fehlfunktion der Abgasklappeneinrichtung an und/oder speichert ein entsprechendes Signal für ein Diagnosesystem. Hierdurch ist bei einer Diagnose der Brennkraftmaschine in der Werkstatt eine Fehlfunktion der Abgasklappeneinrichtung schnell erkennbar und kann entsprechend behoben werden.

In einer bevorzugten Ausgestaltung des erfindungsgemäßen Verfahrens wird der modellierte Wert für den Luftmassenstrom bei weit geöffneter Drosselklappe als Produkt aus Druck und einer temperaturabhängigen Funktion bestimmt. Die Funktion mit ihren Funktionswerten ist hierbei bevorzugt in der Motorsteuerung abgelegt. Bei einer weniger weit geöffneten Drosselklappe kann zusätzlich die Stellung der Drosselklappe und das Druckverhältnis von Saugrohrdruck zu Druck vor der Drosselklappe berücksichtigt werden.

Die erfindungsgemäße Aufgabe wird ebenfalls durch ein Verfahren nach Anspruch 7 gelöst.

Das Verfahren betrifft die Erkennung einer Fehlfunktion einer Saugrohrschalteinrichtung, die eine Saugrohrklappe zur Beeinflussung der maximalen Befüllung der Brennkraftmaschine in einem Ansaugtrakt aufweist und die ansprechend auf Steuersignale einer Motorsteuerung umschaltet. Das Verfahren betrifft eine Diagnose bei einer Drosselklappenöffnung weiter als ein vorbestimmter Schwellenwert. Erfindungsgemäß wird bei dem Verfahren in einem ersten Schritt die durch eine Drosselklappe dringende Luftmasse (m_thr_real) von einem Luftmassensensor gemessen. Die Motorsteuerung vergleicht bei niedriger Drehzahl die gemessene Luftmasse mit einem Modellwert für den Luftmassenstrom (m_thr_mod), der von einer Umgebungstemperatur (T_amb) und einem Druck (P_thr) abhängt. Die Motorsteuerung erkennt mit Hilfe der Abweichung der Modellwerte von den gefühlten Werten, ob die Saugrohrklappe geschlossen oder geöffnet ist. Ist die Saugrohrklappe bei niedriger Drehzahl geöffnet, so ist der Luftmassenstrom in die Zylinder aufgrund der fehlenden Resonanzladung nicht ausreichend. Diese Abweichung des Luftmassenstroms wird bei dem Vergleich zwischen gefühltem Luftmassenstrom und dem Modellwert festgestellt.

Auch bei der Saugrohrumschaltung wird eine Fehlfunktion erst erkannt, wenn die Abweichung zwischen gefühltem und moduliertem Wert eine Mindestgrenze überschreitet.

In einer bevorzugten Ausgestaltung des Verfahrens wird das Ergebnis aus dem Vergleich überprüft, indem die Motorsteuerung ein Signal zum Öffnen der Saugrohrklappe bei niedriger Drehzahl und weit geöffneter Drosselklappe erzeugt. Wenn die Abweichung zwischen dem modellierten Luftmassenstrom und dem gefühlten Lustmassenstrom nachfolgend nicht weiter zunimmt, wird gefolgert, dass das Saugrohr nunmehr geöffnet ist und keine Fehlfunktion vorliegt. Bevorzugt wird hierbei eine vorbestimmte Verzögerungszeitdauer abgewartet, bis sich der Saugrohrdruck stationär ausgebildet hat.

Bevorzugt zeigt die Motorsteuerung eine erkannte Fehlfunktion auch für die Umschaltklappeneinrichtung an und/oder speichert ein entsprechendes Signal für ein Diagnosesystem. Auch für die Diagnose der Umschaltklappeneinrichtung kann der modellierte Wert für den Luftmassenstrom als Produkt aus Druck und dem Wert einer temperaturabhängigen Funktion bestimmt werden, da eine weit geöffnete Drosselklappe vorliegt. Ansonsten müssen die Drosselklappenöffnung und das Druckverhältnis zwischen Saugrohrdruck und Druck vor der Drosselklappe im Modell zusätzlich mit berücksichtigt werden.

Die erfindungsgemäßen Verfahren werden anhand der nachfolgenden Figuren näher erläutert. Es zeigt:

Fig. 1 eine Schaltsaugrohranordnung und

Fig. 2 eine schematische Ansicht eines Abgassystems mit einer Abgasklappe.

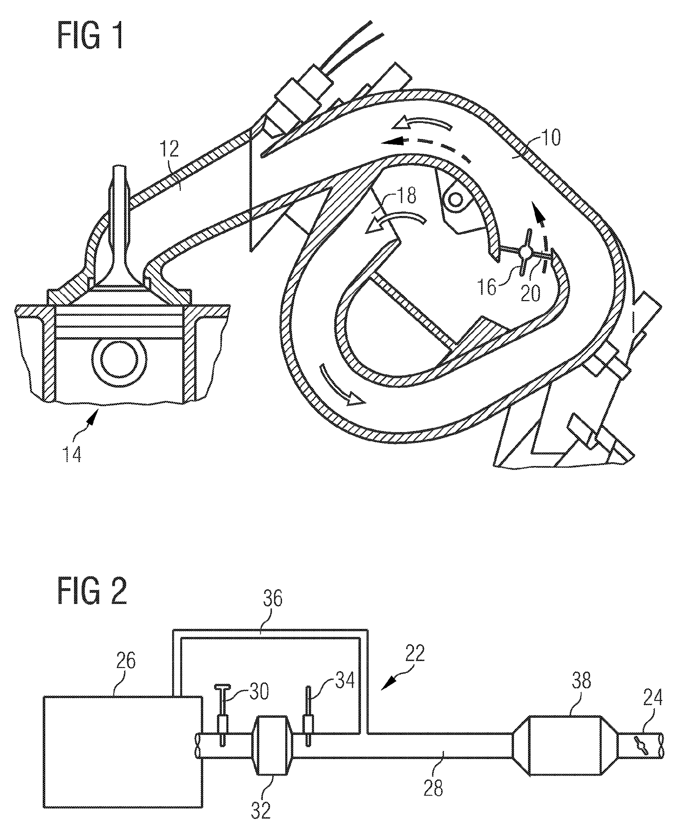

Fig. 1 zeigt eine schematische Ansicht eines Schaltsaugrohres 10 in einer Brennkraftmaschine (nicht dargestellt). Das Schaltsaugrohr 10 führt vorverdichtete Luft über den Rohrabschnitt 12 in den schematisch dargestellten Zylinder 14.

Abhängig von der Drehzahl der Brennkraftmaschine stellt die Motorsteuerung (nicht dargestellt) eine Position für eine Saugrohrklappe 16 ein. In Fig. 1 ist die Ansaugklappe 16 in ihrer geöffneten Position dargestellt, in der Luft über die Öffnung 18 und die Öffnung 20 in das Saugrohr 10 eintritt. Die geöffnete Saugrohrklappe 16 bewirkt, dass zur Ausbildung einer Resonanz der Ladeluft im wesentlichen nur der kürzere Abschnitt des Saugrohrs 10 stromabwärts von der Öffnung 20 zur Verfügung steht. Hierdurch wird die wirksame Länge des Saugrohres verkürzt.

Bei niedrigen Motordrehzahlen liefert die geschlossene Saugrohrklappe 16 mit dem langen Saugrohr eine höhere Luftmasse im Zylinder als das kurze Saugrohr. Bei höherer Luftmasse dreht sich dieses Verhalten genau um, so dass das kurze Saugrohr eine größere Luftmasse als das lange Saugrohr liefert. Ist die Funktionalität der Saugrohrklappe 16 nun gestört, in dem sie beispielsweise dauerhaft geschlossen oder geöffnet ist, so macht sich die Funktionsstörung der Saugrohrklappe bei hoher bzw. niedriger Motordrehzahl bemerkbar. Wenn die Saugrohrklappe nicht bei der vorbestimmten Motordrehzahl umgeschaltet wird, so führt dies zu einer Abweichung der bei geöffneter Drosselklappe angesaugten Luftmasse gegenüber einem von der Motorsteuerung modellierten Wert.

Fig. 2 zeigt in einer sehr schematischen Ansicht ein Abgassystem 22 mit einer Abgasklappe 24. Die Brennkraftmaschine 26 gibt ihre Abgase über eine Abgasleitung 28 aus. Die Abgasleitung 28 besitzt beispielsweise eine bezüglich ihres Ausgangssignals ein lineares Verhalten aufweisende Lambdasonde 30, die stromaufwärts von einem Katalysator 32 in dem Abgasstrom vorgesehen ist. Nachfolgend werden die Abgase in dem Katalysator 32 gereinigt und durch eine zweite Lambdasonde 34 erneut gemessen. Stromabwärts von der zweiten Lambdasonde 34 ist schematisch eingezeichnet eine Abgasrückführung 36. Der Nachschalldämpfer 38 ist schematisch stromaufwärts von der Abgasklappe 24 dargestellt.

Bei niedrigen Motordrehzahlen, vorzugsweise unter 2.500 U/min, überwiegen die tieffrequenten Mündungsgeräusche, diese werden durch die geschlossene Abgasklappe 24 drastisch reduziert. Beispielmessungen haben ergeben, dass eine Reduzierung um ungefähr 10 dB erzielt werden kann. Bei höheren Drehzahlen überwiegen die Roll- und Fahrgeräusche, so dass durch Einschließen der Abgasklappe 24 keine Geräuschreduzierung erzielt werden kann.

Ist bei hohen Drehzahlen die Abgasklappe 24 geschlossen, so wird über die erhöhte Abgasrückführung 36 der Luftmassenstrom zu den Zylindern reduziert. Diese Reduktion des Luftmassenstroms in die Zylinder wird bei geöffneter Drosselklappe und hoher Drehzahl durch das erfindungsgemäße Verfahren erkannt, indem der gemessene Luftmassenstrom von dem modellierten Luftmassenstrom abweicht.

Der modellierte Luftmassenstrom (m_thr_mod) wird bei weit geöffneter Drosselklappe durch die Motorsteuerung wie folgt berechnet:

$$m\_thr\_mod = P\_thr \cdot f\,(T\_amb),$$

wobei P_thr der Druck vor der Drosselklappe, T_amb die Umgebungstemperatur und f (T_amb) eine in Form von Kennlinien und/oder Daten abgelegte Funktion bezeichnet.

## Patentansprüche

1. Verfahren zur Erkennung einer Fehlfunktion bei einer Abgasklappeneinrichtung in einem Abgassystem einer Brennkraftmaschine, wobei die Abgasklappeneinrichtung eine Abgasklappe (24) zur Beeinflussung der Akustik in dem Abgassystem (22) aufweist und ansprechend auf Steuersignale einer Motorsteuerung die Abgasklappe (24) schließt und öffnet, **gekennzeichnet durch** folgende Verfahrensschritte:

   - ein Luftmassensensor misst die **durch** eine Drosselklappe tretende Luftmasse (m_thr_real) bei hohem Luftmassenstrom in die Brennkraftmaschine,
   - die Motorsteuerung vergleicht die gemessene Luftmasse mit einem Modellwert für den Luftmassenstrom (m_thr_mod), der von der Umgebungstemperatur (T_amb) und dem Druck (P_thr) abhängt,
   - wobei die Motorsteuerung mit Hilfe der Abweichung des gemessenen Wertes von den Modellwerten erkennt, ob die Abgasklappe (24) geöffnet oder geschlossen ist.

2. Verfahren nach Anspruch 1, **dadurch gekennzeichnet, dass** die Motorsteuerung ein Signal erzeugt, das eine Fehlfunktion der Abgasklappeneinrichtung anzeigt, wenn die Abweichung einen Schwellenwert überschreitet.

3. Verfahren nach Anspruch 1 oder 2, **dadurch gekennzeichnet, dass** die Motorsteuerung bei vorherigem Befehl zum Öffnen der Abgasklappe (24) ein Signal zum Schließen der Abgasklappe (24) erzeugt, dieses an die Abgasklappeneinrichtung anlegt und die Motorsteuerung eine Fehlfunktion der Abgasklappe (24) erkennt, wenn die Abweichung nach dem Signal zum Schließen der Abgasklappe (24) nicht zunimmt.

4. Verfahren nach Anspruch 3, **dadurch gekennzeichnet, dass** die Erkennung der Fehlfunktion erfolgt, nachdem eine vorbestimmte Zeitdauer seit dem Signal zum Schließen der Abgasklappe (24) verstrichen ist.

5. Verfahren nach einem der Ansprüche 1 bis 4, **dadurch gekennzeichnet, dass** die Motorsteuerung eine bekannte Fehlfunktion der Abgasklappeneinrichtung anzeigt und/oder ein entsprechendes Signal für ein Diagnosesystem der Motorsteuerung speichert.

6. Verfahren nach einem der Ansprüche 1 bis 5, **dadurch gekennzeichnet, dass** bei weit geöffneter Drosselklappe der modellierte Wert für den Luftmassenstrom (m_thr_mod) als Produkt aus dem Druck und einer temperaturabhängigen Funktion berechnet wird.

7. Verfahren nach Anspruch 6, **dadurch gekennzeichnet, dass** der modellierte Wert für den Luftmassenstrom bei einer nicht weit geöffneten Drosselklappe von der Stellung der Drosselklappe und dem Druckverhältnis zwischen Saugrohrdruck und Druck vor der Drosselklappe abhängt.

8. Verfahren zur Erkennung einer Fehlfunktion bei einer Saugrohrumschalteinrichtung in einem Ansaugtrakt einer Brennkraftmaschine, wobei die Saugrohrumschalteinrichtung eine Saugrohrklappe (16) zur Beeinflussung der maximalen Befüllung in einem Ansaugtrakt (10) aufweist und ansprechend auf Steuersignale einer Motorsteuerung die Saugrohrklappe (16) schließt oder öffnet, **gekennzeichnet durch** folgende Verfahrensschritte:

- ein Luftmassensensor misst die **durch** eine Drosselklappe tretende Luftmasse (m_thr_real) bei niedriger Drehzahl und weit geöffneter Drosselklappe der Brennkraftmaschine,
- die Motorsteuerung vergleicht die gemessene Luftmasse mit einem Modellwert für den Luftmassenstrom (m_thr_mod), der von der Umgebungstemperatur (T_amb) und dem Druck (P_thr) abhängt,
- wobei die Motorsteuerung mit Hilfe der Abweichung des gemessenen Wertes von dem modulierten Wert erkennt, ob die Saugrohrklappe (16) geöffnet oder geschlossen ist.

9. Verfahren nach Anspruch 8,
   **dadurch gekennzeichnet, dass** die Motorsteuerung ein Signal erzeugt, das eine Fehlfunktion der Saugrohrumschalteinrichtung anzeigt, wenn die Abweichung einen Schwellenwert überschreitet.

10. Verfahren nach Anspruch 8 oder 9,
    **dadurch gekennzeichnet, dass** die Motorsteuerung bei niedriger Drehzahl und einem vorherigen Befehl zum Schließen der Saugrohrklappe (16) ein Signal zum Öffnen der Saugrohrklappe (16) erzeugt, dieses an die Umschalteinrichtung anlegt und die Motorsteuerung eine Fehlfunktion der Abgasklappeneinrichtung erkennt, wenn die Abweichung nach dem Signal zum Öffnen der Saugrohrklappe (16) nicht zunimmt.

11. Verfahren nach Anspruch 10,
    **dadurch gekennzeichnet, dass** die Erkennung der Fehlfunktion erfolgt, nachdem eine vorbestimmte Zeitdauer seit dem Signal zum Öffnen der Saugrohrklappe (16) verstrichen ist.

12. Verfahren nach einem der Ansprüche 8 bis 11,
    **dadurch gekennzeichnet, dass** die Motorsteuerung eine erkannte Fehlfunktion anzeigt und/oder ein entsprechendes Signal für ein Diagnosesystem speichert.

13. Verfahren nach einem der Ansprüche 8 bis 12,
    **dadurch gekennzeichnet, dass** der modellierte Wert für den Luftmassenstrom bei weit geöffneter Drosselklappe als Produkt aus Druck und Wert einer temperaturabhängigen Funktion berechnet wird.

14. Verfahren nach Anspruch 13,
    **dadurch gekennzeichnet, dass** der modellierte Wert für den Luftmassenstrom zusätzlich von der Stellung der Drosselklappe und dem Druckverhältnis des Saugrohrdrucks und dem Druck vor der Drosselklappe abhängt, falls die Drosselklappe nicht weit geöffnet ist.

**EP 1 291 508 A2**

FIG 1

FIG 2

6